# EUROPÄISCHE PATENTANMELDUNG

(11) **EP 1 106 890 A1**
(43) Veröffentlichungstag der Anmeldung: **13.06.2001**
(21) Anmeldenummer: 00124860.8
(22) Anmeldetag: 15.11.2000
(51) Int. Cl.: F16L 11/15, F16L 11/20, F16L 11/127, F16L 21/02, F16L 47/00

(54) **Diffusionsdichte Fluidleitung**

(30) Priorität: 30.11.1999 DE 19957567
(71) Anmelder: Rasmussen GmbH, D-63477 Maintal (DE)
(72) Erfinder: Kertesz, Janos, 65719 Hofheim (DE)
(74) Vertreter: Knoblauch, Ulrich, Dr.-Ing.

(57) **Zusammenfassung**

Eine diffusionsdichte Fluidleitung für kohlenwasserstoffhaltige Fluide, insbesondere Kraftstoffe, weist erfindungsgemäß ein auf seiner Außenseite freies Wellrohr (1) aus korrosionsfestem Metall und einen ersten mit dem einen Ende des Wellrohrs (1) stoffschlüssig und/oder formschlüssig dicht verbundenen Kupplungsteil (2) auf. Eine solche Fluidleitung hat nicht nur einen einfachen Aufbau, sondern ist auch zumindest über den größten Teil ihrer Länge absolut diffusionsdicht und biegsam.

## Beschreibung

Die Erfindung betrifft eine diffusionsdichte Fluidleitung für kohlenwasserstoffhaltige Fluide, insbesondere Kraftstoffe.

Solche Fluidleitungen werden hauptsächlich in der Kraftfahrzeugindustrie benötigt. Insbesondere auf diesem Gebiet werden immer höhere Anforderungen gegen einen Austritt von Kohlenwasserstoffen, wie flüssigen Kraftstoffen oder Bremsöl, sei es durch Defekte, Undichtigkeiten oder Diffusion nach außen, sowie an die mechanische Festigkeit, Korrosionsfestigkeit, Hitzebeständigkeit, Feuerfestigkeit und Flexibilität gestellt.

Um möglichst alle diese Forderungen zu erfüllen, sind sowohl in der Praxis als auch in der Literatur zahlreiche Lösungsansätze bekannt geworden. Im wesentlichen bestehen sie aus Kunststoffrohren der verschiedensten Materialien, die entweder wiederverwendbar und/oder auf natürlichem Wege abbaubbar sind, sei es in glatter oder gewellter Form, aus mehreren Schichten unterschiedlicher Materialien und Materialgemische, wobei auch eine Schicht aus Metall bestehen kann, um eine möglichst hohe Diffusionsdichtigkeit bzw. Sperrfähigkeit gegen Diffusion zu erzielen. Man hat auch schon die unterschiedlichsten Rohre in vorbestimmten Längen mit an den Enden befestigten Kupplungsteilen versehen, um sie auf einfache Weise mit einem dazu passenden Kupplungsteil verbinden zu können, der mit einem Aggregat, Rohr oder Schlauch verbunden ist.

Diese bekannten Lösungen sind zumeist aufwendig, schwierig herzustellen und erfüllen dennoch häufig die meisten von der Kraftfahrzeugindustrie gestellten Anforderungen nicht oder nur teilweise.

Aus der US-Patentschrift 5 538 294 ist eine weitgehend diffusionsdichte Fluidleitung in Form eines auf seiner Außenseite freien, innen und außen gewellten Wellrohrs aus Metall und zweier mit jeweils einem der Wellrohren-den durch Flansche oder eine Schraubverbindung verbundener Kupplungsteile aus Metall bekannt. Eine derartige, rein formschlüssige Verbindung ist nicht hinreichend dicht, insbesondere nicht hinreichend diffusionsdicht. Inwieweit das Metall korrosionsfest ist, ergibt sich nicht aus dieser Patentschrift. Ein mit seiner gewellten Innenseite dem Fluid ausgesetztes Wellrohr erhöht den Strömungswiderstand und unterliegt der Gefahr, daß sich in nach dem Verlegen unten liegenden inneren Wellentälern des Wellrohrs im Fluid enthaltene Teilchen absetzen und/oder Flüssigkeit, wie Kondenswasser oder Dieselkraftstoff, sammelt und bei tieferen Temperaturen gefriert.

Der Erfindung liegt die Aufgabe zugrunde, eine Fluidleitung für Kohlenwasserstoffe, insbesondere Kraftstoffe, anzugeben, die es ermöglicht, die meisten von der Kraftfahrzeugindustrie gestellten Anforderungen in sehr hohem Maße zu erfüllen.

Zur Lösung dieser Aufgabe enthält erfindungsgemäß eine diffusionsdichte Fluidleitung für Kohlenwasserstoffe, insbesondere Kraftstoffe, ein auf seiner Außenseite freies, innen und außen gewelltes Wellrohr aus korrosionsfestem Metall, einen ersten mit dem einen Ende des Wellrohrs stoffschlüssig oder zusätzlich formschlüssig dicht verbundenen Kupplungsteil und innerhalb des Wellrohrs ein außen und innen glattes Innenrohr aus Kunststoff.

Eine derartige Fluidleitung erfüllt in sehr hohem Maße praktisch alle von der Kraftfahrzeugindustrie gestellten Anforderungen. So ist zumindest das Wellrohr über seine gesamte Länge völlig diffusionsdicht, aber auch von hoher mechanischer Festigkeit, Feuerfestigkeit, Hitzebeständigkeit, Stoßfestigkeit, Biegsamkeit und Korrosionsbeständigkeit. Da es aus Metall besteht, läßt es sich auch nicht durch Reibung elektrisch aufladen. Wegen der hohen Biegsamkeit und des an wenigstens einem Ende angebrachten Kupplungsteils läßt sich die Fluidleitung auch leicht mit den verschiedensten Krümmungen verlegen und mittels des Kupplungsteils an einem dazu passenden Kupplungsteil, der an einem Rohrstutzen eines Aggregats oder dem Ende einer anderen Fluidleitung befestigt ist, rasch verbinden, ohne daß der erste Kupplungsteil an der Einbaustelle mit dem Wellrohr verbunden werden müßte. Wenn der erste Kupplungsteil auch formschlüssig mit dem Wellrohr verbunden ist, ist die Verbindung besonders fest. Das glatte Innenrohr aus Kunststoff ergibt bei einem beidseitig gewellten Wellrohr auf der Innenseite der Fluidleitung eine glatte Fläche, die den Strömungswiderstand in der Fluidleitung verringert und die Ansammlung von Teilchen und Flüssigkeit in unteren Wellentälern auf der Innenseite des Wellrohrs verhindert.

Der erste Kupplungsteil kann ebenfalls aus korrosionsfestem Metall bestehen. Alternativ kann er aus thermoplastischem Kunststoff bestehen.

Die Ausbildung des Kupplungsteils aus Metall hat den Vorteil, daß dann auch das Kupplungsteil eine besonders hohe Diffusionsdichtigkeit aufweist. Thermoplastischer Kunststoff läßt sich dagegen leichter in der gewünschten Form herstellen und kann ebenfalls verhältnismäßig diffusionsdicht sein.

Bei dem Metall, aus dem das Wellrohr oder der erste Kupplungsteil besteht, kann es sich um Edelstahl handeln. Dieses Material ist besonders korrionsfest.

Vorzugsweise ist dafür gesorgt, daß ein zweiter Kupplungsteil aus korrosionsfestem Metall, insbesondere Edelstahl, oder thermoplastischem Kunststoff mit dem anderen Ende des Wellrohrs stoff- oder zusätzlich formschlüssig verbunden ist. Bei dieser Ausbildung können beide Enden der Fluidleitung rasch mit einem entsprechenden Kupplungsteil eines Rohrstutzens, eines Schlauches oder eines anderen Rohres verbunden werden, ohne den zweiten Kupplungsteil an der Einbaustelle mit dem Wellrohr verbinden zu müssen.

Der erste Kupplungsteil oder beide Kupplungsteile können eine radiale Fläche aufweisen, die mit einer radialen Fläche am jeweiligen Ende des Wellrohrs stoffschlüssig verbunden ist. Eine solche Verbindung ist besonders dicht. Wenn der Kupplungsteil oder beide Kupplungsteile aus Metall bestehen, können sie beispielsweise mit dem aus Metall bestehenden Wellrohr verschweißt werden. Es ist aber auch möglich, das Wellrohr mit dem Kupplungsteil oder den Kupplungsteilen zu verkleben. Wenn der oder jeder Kupplungsteil aus thermoplastischem Kunststoff besteht, kann er ebenfalls mittels eines Haftvermittlers zwischen den radialen Flächen dicht mit dem Wellrohr verbunden werden.

Ferner kann dafür gesorgt sein, daß das Wellrohr an dem oder jedem seiner Enden, das mit einem Kupplungsteil verbunden ist, einen radial nach außen ragenden Vorsprung aufweist, der gemeinsam mit einem Endabschnitt des Wellrohrs und einem an den Endabschnitt angrenzenden Abschnitt des betreffenden Kupplungsteils mit einem Kunststoff-Ring umspritzt ist. Dieser Kunststoff-Ring kann allein oder zusätzlich zu den geschilderten stoffschlüssigen Verbindungen vorgesehen sein und ermöglicht zugleich eine formschlüssige Verbindung über den beim Umspritzen des Endabschnitts des Wellrohrs ebenfalls umspritzten Vorsprung, der auf diese Weise in dem thermoplastischen Kunststoff des Kunststoff-Rings formschlüssig eingebettet wird.

Der Vorsprung kann als teilweise oder ganz umlaufender Flansch ausgebildet sein. Im letzteren Falle ergibt sich eine größere Berührungsfläche zwischen dem Kunststoffring und dem Flansch, mit einer entsprechend höheren Dichtwirkung.

Wenn der Kunststoff-Ring und das Wellrohr nicht mittels Haftvermittler stoffschlüssig verbunden werden, kann zwischen dem Kunststoff-Ring und dem Wellrohr ein Dichtring angeordnet sein.

Auch zwischen dem Kunststoff-Ring und dem oder jedem Kupplungsteil kann ein Dichtring angeordnet sein, wenn der Kunststoff-Ring nicht stoffschlüssig mit dem oder jedem Kupplungsteil verbunden wird.

Das Innenrohr kann überwiegend biegsamen thermoplastischen Kunststoff oder ein vernetztes Gummi-Elastomer aufweisen. Dadurch wird die Biegsamkeit der Fluidleitung durch die Hinzunahme des Innenrohres nicht beeinträchtigt.

Der Kunststoff des Innenrohrs kann ferner mit elektrisch leitfähigen Teilchen, insbesondere Ruß, vermischt sein, um auch eine statische elektrische Aufladung des Innenrohrs durch Reibung zwischen dem Innenrohr und dem hindurchströmenden Fluid zu vermeiden.

Sodann kann dafür gesorgt sein, daß ein Endabschnitt des oder jedes mit dem Wellrohr verbundenen Kupplungsteils in einen Endabschnitt des Innenrohrs hineingepreßt ist. Auf diese Weise ergibt sich auch zwischen dem Innenrohr und dem Kupplungsteil eine verhältnismäßig dichte und feste Verbindung.

Wenn der Endabschnitt des oder jedes Kupplungsteils dabei gerippt ist, wirkt die Verbindung zwischen Kupplungsteil und Innenrohr wie eine Art Labyrinthdichtung, da das Material des Innenrohres zwischen den Rippen des gerippten Endabschnitts eingreifen kann. Zusätzlich wirkt diese Art der Verbindung als formschlüssige Verbindung.

Statt aus Kunststoff kann das Innenrohr auch aus einem dünnen biegsamen Metall bestehen. Es erhöht dann zusätzlich die Diffusionsdichtigkeit, ohne die Flexibilität zu beeinträchtigen.

Wenn das Wellrohr innen und außen gewellt ist, ist es besonders biegsam.

Ferner kann das Wellrohr glatte und gewellte Abschnitte aufweisen. Auf diese Weise kommt man mit weniger Material für die Fluidleitung aus, wenn von vornherein feststeht, welche Abschnitte der Fluidleitung beim Einbau nicht gebogen werden müssen. Diese Abschnitte können dann glatt, d.h. ungewellt, ausgebildet sein.

Die Erfindung und ihre Weiterbildungen werden nachstehend anhand der beiliegenden Zeichnungen bevorzugter Ausführungsbeispiele näher beschrieben. Hierin zeigen:
- Fig. 1: einen Axialschnitt durch ein erstes Ausführungsbeispiel einer erfindungsgemäßen Fluidleitung und
- Fig. 2: einen Axialschnitt durch ein zweites Ausführungsbeispiel einer erfindungsgemäßen Fluidleitung.

Die dargestellten Fluidleitungen werden vornehmlich im Kraftfahrzeug verwendet, insbesondere für kohlenwasserstoffhaltige Fluide, wie Kraftstoffe und Bremsöl. Sie können aber auch für glykoholhaltiges Kühlwasser oder brennbare Gase verwendet werden. Zu diesem Zweck müssen sie auch gegen das Hindurchdiffundieren solcher Flüs-sigkeiten und Gase besonders dicht sein.

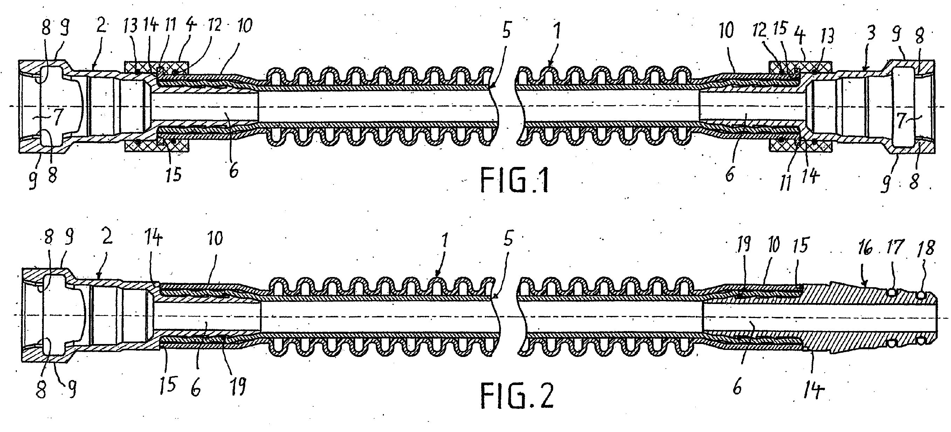

Die Fluidleitung nach Fig. 1 besteht aus einem Wellrohr 1 aus korrosionsfestem Metall, hier Edelstahl, einem ersten mit dem einen Ende des Wellrohrs 1 stoffschlüssig oder zusätzlich formschlüssig dicht verbundenen Kupplungsteil 2 aus thermoplastischem Kunststoff, einem zweiten mit dem anderen Ende des Wellrohrs 1 stoffschlüssig oder zusätzlich formschlüssig dicht verbundenen Kupplungsteil 3 aus thermoplastischem Kunststoff, zwei Kunststoff-Ringen 4 und einem innen und außen glatten Innenrohr 5, das überwiegend aus thermoplastischem Kunststoff oder einem vernetzten Gummi-Elastomer besteht.

Die Kupplungsteile 2 und 3 haben einen außen tannenbaumartig gerippten Endabschnitt 6. Jeder Endabschnitt 6 ist in jeweils einen Endabschnitt des Innenrohrs 5 axial hineingepreßt, so daß die Kupplungsteile 2 und 3 reib- und formschlüssig mit dem Innenrohr 5 verbunden sind. In die freien Endabschnitte der Kupplungsteile 2 und 3 kann jeweils ein entsprechendes Kupplungsteil hineingesteckt werden, so daß die zusammengesteckten Kupplungsteile miteinander verrasten, wobei radial nach innen an einem flexiblen ovalen Ring 7 vorstehende Rastnasen 8 hinter einer umlaufenden Halterippe des hineingesteckten Kupplungsteils einrasten. Der Ring 7 ist über elastische Stege 9 mit dem übrigen Teil der Kupplungsteile verbunden.

Das Wellrohr 1 hat glatte, d.h. ungewellte, Endabschnitte 10 und ist an seinen freien Enden jeweils mit einem radial nach außen ragenden Vorsprung 11, hier in Form eines umlaufenden Flansches, versehen, der durch den Kunststoff-Ring 4 umspritzt ist. Das Material des Kunststoff-Rings 4 ist so gewählt, daß es mit dem Kunststoff der Kupplungsteile 2 und 3 beim Umspritzen eine Schmelzverbindung eingeht. Auch mit dem Metall des Wellrohrs 1 kann es unter Zwischenschaltung eines Haftvermittlers stoffschlüssig verbunden sein. Auf diese stoffschlüssige Verbindung zwischen Kunststoff-Ring 4 und Wellrohr 1 kann jedoch verzichtet werden, wenn statt dessen ein Dichtring 12 zwischen Kunststoff-Ring 4 und Wellrohr 1 angeordnet wird. Alternativ können die Kupplungsteile 2 und 3 aus korrosionsfestem Metall, vorzugsweise Edelstahl, bestehen. Gegebenenfalls kann der Kunststoff-Ring 4 mit dem betreffenden Kupplungsteil 2 bzw. 3 unter Zwischenschaltung eines Haftvermittlers verbunden sein, wobei dann zusätzlich ein Dichtring 13 zwischen dem Kunststoff-Ring 4 und dem betreffenden Kupplungsteil 2 bzw. 3 angeordnet sein kann.

Alternativ oder zusätzlich kann die radiale Fläche 14 an jedem Ende des Wellrohrs 1 mit einer radialen Fläche 15 der Kupplungsteile 2 und 3 stoffschlüssig verbunden sein. Wenn die Kupplungsteile 2 und 3 aus Metall bestehen, können die radialen Flächen 14 und 15 verschweißt sein. Wenn die Kupplungsteile 2 und 3 dagegen aus thermoplastischem Kunststoff bestehen, können die radialen Flächen 14 und 15 unter Zwischenschaltung eines Haftvermittlers verbunden sein.

Das Innenrohr 5 kann zusätzlich zu dem biegsamen thermoplastischen Kunststoff oder vernetzten Gummi-Elastomer elektrisch leitfähige Teilchen, insbesondere Ruß, enthalten.

Alternativ kann das Innenrohr 5 aber ebenfalls aus einem dünnen biegsamen Metall bestehen.

Das Wellrohr 1 ist innen und außen gewellt. Ferner kann es weitere glatte Abschnitte aufweisen, die nicht dargestellt sind.

Wegen der Biegsamkeit sowohl des Wellrohrs 1 als auch des Innenrohrs 5 kann die Fluidleitung in nahezu beliebig gekrümmter Form verlegt werden. Die Ausbildung mit glatten Abschnitten würde gewählt, wenn von vornherein feststeht, welche Abschnitte beim Verlegen der Fluidleitung nicht gekrümmt werden müssen. Diese Abschnitte würden dann ungewellt ausgebildet.

Da das Wellrohr 1 aus Metall besteht, ist es praktisch absolut diffusionsdicht. Dies gilt auch für die Ausbildung der Kupplungsteile 2 und 3 aus Metall. Wenn diese mit dem Wellrohr 1 verschweißt sind, ist die Fluidleitung praktisch über ihre gesamte Länge absolut diffusionsdicht. Wenn die Kupplungsteile 2 und 3 dagegen aus Kunststoff hergestellt werden, wären sie zwar nicht absolut diffusionsdicht, doch wäre dann die Länge, über die die Fluidleitung nicht völlig diffusionsdicht ist, verhältnismäßig gering. Darüber hinaus kann der zur Herstellung der Kupplungsteile 2 und 3 gegebenenfalls verwendete Kunststoff ebenfalls weitgehend diffusionsdicht sein. Auch die Montage der Fluidleitung ist leicht durchführbar, da die Kupplungsteile 2 und 3 bereits fabrikseitig mit dem Wellrohr 1 und dem Innenrohr 5 verbunden werden und bei der Montage nur mit entsprechenden Kupplungsteilen zusammengesteckt zu werden brauchen.

Die Fluidleitung nach Fig. 2 unterscheidet sich von der nach Fig. 1 prinzipiell nur dadurch, daß die Kunststoff-Ringe 4 und die Dichtringe 12 und 13 sowie die Vorsprünge 11 weggelassen sind. Ferner ist anstelle des bei der Fluidleitung nach Fig. 1 vorgesehenen Aufnahme-Kupplungsteils 3 ein Steckkupplungsteil 16 vorgesehen, der mit einem der Kupplungsteile 2 und 3 einer Fluidleitung nach Fig. 1 zusammengesteckt werden kann. Zur Abdichtung der Steckverbindung ist der Kupplungsteil 16 mit Dichtringen 17 und 18 versehen.

Die Kupplungsteile 2 und 16 nach Fig. 2 bestehen aus Metall. Zumindest das Wellrohr 1 besteht wiederum aus Metall und ist mit den an seinen Enden vorgesehenen radialen Flächen 14 mit den radialen Flächen 15 der Steckkupplungsteile 2 und 16 verschweißt. Zusätzlich sind Dichtringe 19 zwischen den Endabschnitten 6 der Kupplungsteile 2 und 16 und dem Innenrohr 5 angeordnet. Diese Dichtringe 19, in Form von O-Ringen, können auch bei der Fluidleitung nach Fig. 1 vorgesehen sein.

Das Innenrohr 5 verringert den Strömungswiderstand, verhindert aber auch, daß sich in inneren Wellentälern, die nach dem Verlegen der Fluidleitung unten liegen, Teilchen und/oder Flüssigkeit ansammeln, wobei letztere der Gefahr unterliegt, daß sie, z.B. Kondenzwasser oder Dieselkraftstoff, bei tieferen Temperaturen gefriert.

Eine Abwandlung der in den Fig. 1 bis 3 dargestellten Fluidleitungen kann ferner darin bestehen, daß an ihrem einen Ende der Kupplungsteil weggelassen wird, z.B. wenn nicht von vornherein feststeht, mit welchem Kupplungsteil, einem Aufnahme-Kupplungsteil oder einem Steckkupplungsteil, dieses Ende verbunden werden soll.

## Patentansprüche

1. Diffusionsdichte Fluidleitung für kohlenwasserstoffhaltige Fluide, insbesondere Kraftstoffe, mit einem auf seiner Außenseite freien innen und außen gewellten Wellrohr (1) aus korrosionsfestem Metall, einem ersten mit dem einen Ende des Wellrohrs (1) stoffschlüssig oder zusätzlich formschlüssig dicht verbundenen Kupplungsteil (2) und einem innerhalb des Wellrohrs (1) eingeordneten, außen und innen glatten Innenrohr (5) aus Kunststoff.

2. Fluidleitung nach Anspruch 1, dadurch gekennzeichnet, daß der erste Kupplungsteil (2) aus korrosionsfestem Metall oder thermoplastischem Kunststoff besteht.

3. Fluidleitung nach Anspruch 1 oder 2, dadurch gekennzeichnet, daß das Metall ein Edelstahl ist.

4. Fluidleitung nach einem der Ansprüche 1 bis 3, dadurch gekennzeichnet, daß ein zweiter Kupplungsteil (3; 16) aus korrosionsfestem Metall, insbesondere Edelstahl, oder thermoplastischem Kunststoff mit dem anderen Ende des Wellrohrs (1) stoff- oder zusätzlich formschlüssig verbunden ist.

5. Fluidleitung nach Anspruch 4, dadurch gekennzeichnet, daß der erste Kupplungsteil (2) oder beide Kupplungsteile (2, 3, 16) eine radiale Fläche (15) aufweisen, die mit einer radialen Fläche (14) am jeweiligen Ende des Wellrohrs (1) stoffschlüssig verbunden ist.

6. Fluidleitung nach einem der Ansprüche 1 bis 5, dadurch gekennzeichnet, daß das Wellrohr (1) an dem oder jedem seiner Enden, das mit einem Kupplungsteil (2, 3) verbunden ist, einen radial nach außen ragenden Vorsprung (11) aufweist, der gemeinsam mit einem Endabschnitt (10) des Wellrohrs (1) und einem an den Endabschnitt (10) angrenzenden Abschnitt des betreffenden Kupplungsteils (2; 3) mit einem Kunststoff-Ring (4) umspritzt ist.

7. Fluidleitung nach Anspruch 6, dadurch gekennzeichnet, daß zwischen dem Kunststoff-Ring (4) und dem Wellrohr (1) ein Dichtring (12) angeordnet ist.

8. Fluidleitung nach Anspruch 7, dadurch gekennzeichnet, daß zwischen dem Kunststoff-Ring (4) und dem oder jedem Kupplungsteil (2; 3) ein Dichtring (13) angeordnet ist.

9. Fluidleitung nach einem der Ansprüche 1 bis 8, dadurch gekennzeichnet, daß das Innenrohr (5) überwiegend biegsamen thermoplastischen Kunststoff oder ein vernetztes Gummi-Elastomer aufweist.

10. Fluidleitung nach einem der Ansprüche 1 bis 9, dadurch gekennzeichnet, daß der Kunststoff des Innenrohrs (5) mit elektrisch leitfähigen Teilchen, insbesondere Ruß, vermischt ist.

11. Fluidleitung nach einem der Ansprüche 1 bis 10, dadurch gekennzeichnet, daß ein Endabschnitt (6) des oder jedes mit dem Wellrohr (1) verbundenen Kupplungsteils (2; 3; 16) in einen Endabschnitt des Innenrohrs (5) hineingepreßt ist.

12. Fluidleitung nach Anspruch 11, dadurch gekennzeichnet, daß der Endabschnitt (6) des oder jedes Kupplungsteils (2; 3; 16) gerippt ist.

13. Fluidleitung nach einem der Ansprüche 1 bis 12, dadurch gekennzeichnet, daß das Innenrohr (5) aus einem dünnen biegsamen Metall besteht.

14. Fluidleitung nach einem der Ansprüche 1 bis 13, dadurch gekennzeichnet, daß das Wellrohr glatte Abschnitte (10, 20) und gewellte Abschnitte aufweist.
